# EUROPEAN PATENT APPLICATION

(11) **EP 3 410 367 A1**
(43) Date of publication of application: **05.12.2018**
(21) Application number: 18152918.1
(22) Date of filing: 23.01.2018
(51) Int. Cl.: G06Q 10/08

(54) **METHOD OF MANAGING REUSE OF RETURNABLE BOTTLE**

(30) Priority: 31.05.2017 JP 2017108143
(71) Applicant: Nihon Taisanbin Kogyou Kabushiki Kaisha, Ogaki-shi, Gifu 503-0986 (JP)
(72) Inventor: TSUTSUMI, Takeshi, Ogaki-shi,, Gifu 503-0986 (JP)
(74) Representative: TBK

(57) **Abstract**

A novel method of managing reuse of a returnable bottle which individually manages returnable bottles so as to manage reuse linked with their individual states of use and thereby enable reusable bottles to be accurately, easily, and efficiently separated from other bottles in a scientific manner and enable efficient inspection of aging and other factors which cannot be determined from outside appearance, also, a method of managing reuse of a returnable bottle efficiently promoting reuse of returnable bottles and thereby lowering the costs relating to reuse and reducing energy and otherwise benefitting the environment, comprising, at the time of new production of a returnable bottle body, forming on a bottle body surface a product identification mark part engraved with an identification code as product identification data of the bottle body, reading the product identification mark part and writing and storing the product identification data of the bottle body in the storage medium linked with individual usage state data, and judging permission for continued reuse of the bottle body based on the individual usage state data stored in the storage medium.

## Description

### BACKGROUND OF THE INVENTION

### 1. Field of the Invention

The present invention relates to a method of managing reuse of a returnable bottle.

### 2. Description of the Related Art

Known in the field of bottles for packaging beverages are returnable bottles such as beer bottles and milk bottles which are collected after being used and emptied and then washed and refilled for repeat use. Such returnable bottles are being looked at again as being more environmentally friendly containers, compared with one-way bottles which are disposed of after single use, from the viewpoints of reducing production of waste, conserving raw materials and the resources and energy involved in production, and reducing CO₂ emissions and other environmental load. In recent years, proposals have been made for raising the strength of the bottle bodies to make them more resistant to cracking and scratching and coating the surfaces of the bottle bodies with plastic to protect the bottle bodies and improve the efficiency of reuse (see Japanese Patent No. 5552147).

When considering the relative superiority of returnable bottles in the above sense, the number of times of reuse, that is, how many times a bottle can be reused, is an important issue. In general, in Japan, a returnable bottle which cannot be reused three times is considered inferior in environmental load compared with a single use light weight one-way bottle (analysis of environmental load of small beer bottles in 2008 Environmental Agency Glass Bottle Recycling Promoter Association "Current State of Returnable Bottles in Japan"). Further, in Japan, a returnable bottle is considered to be usually reused for about eight years over 20 times (Japan Glass Bottle Association HP "Returnable Bottles"). A returnable bottle which is reused 20 times is considered to be improved from "large environmental impact (rank 5) to "small environmental impact" (rank 1 or 2) compared with one-way bottles in respect to the categories of evaluation of global warming CO₂, air pollution, energy consumption, and solid waste ("Relative Comparison of Containers by Inventory Analysis", Glass Bottle Recycling Promoter Association, "Returnable Bottle Navi").

In this way, in returnable bottles, the number of times of reuse is an extremely important element in terms of the above-mentioned environmental load of course and also the operations of bottle manufacturers and beverage manufacturers. On the other hand, however, at the present time, the number of times of use cannot be precisely determined. In most cases, whether or not a bottle body may be reused tends to be judged by the state of appearance through visual inspection etc. It has not been easy to determine the actual number of times of reuse (turnover) or the years of use. Further, in conventional inspection of bottle bodies, the standard for inspection of aging and other factors, which cannot be determined from outside appearance, has not been clearly laid out.

Therefore, the inventor came up with the idea of individually managing returnable bottles so as to manage reuse linked with the individual states of use. Due to this, accurate, scientific management of reuse becomes possible and aging and other factors not able to be determined from the outside appearance can also be efficiently inspected.

As related art, see the above Japanese Patent No. 5552147.

### SUMMARY OF THE INVENTION

The present invention, based on the above idea, provides a novel method of managing reuse of a returnable bottle which individually manages returnable bottles so as to manage reuse linked with their individual states of use and thereby enable reusable bottles to be accurately, easily, and efficiently separated from other bottles in a scientific manner and enable efficient inspection of aging and other factors which cannot be determined from outside appearance. Further, the present invention provides a method of managing reuse of a returnable bottle efficiently promoting reuse of returnable bottles and thereby lowering the costs relating to reuse and reducing energy and otherwise benefitting the environment.

That is, the aspect of the invention of claim 1 relates to a method of managing reuse of a returnable bottle comprising, at the time of new production of a returnable bottle body, forming on a bottle body surface a product identification mark part engraved with an identification code as product identification data of the bottle body, reading the product identification mark part and writing and storing the product identification data of the bottle body in the storage medium linked with individual usage state data, and judging permission for continued reuse of the bottle body based on the individual usage state data stored in the storage medium.

The aspect of the invention of claim 2 relates to a method of managing reuse of a returnable bottle according to claim 1, wherein the individual usage state data is data on the number of times of use and the permission for continued reuse is judged by the data on the number of times of use of the bottle body indicating a predetermined number.

The aspect of the invention of claim 3 relates to a method of managing reuse of a returnable bottle according to claim 1, wherein the product identification mark part is formed on the bottle body surface by laser engraving at the time of the hot end of the process for producing the bottle body.

The aspect of the invention of claim 4 relates to a method of managing reuse of a returnable bottle according to claims 1, wherein the product identification mark part is formed with a two-dimensional code.

According to the method of managing reuse of a returnable bottle according to the aspect of the invention of claim 1, wherein at the time of new production of a returnable bottle body, the bottle body surface is formed with a product identification mark part engraved with an identification code as product identification data of the bottle body, the product identification mark part is read and the product identification data of the bottle body is written and stored in the storage medium linked with individual usage state data, permission for continued reuse of the bottle body is judged based on the individual usage state data stored in the storage medium by managing individually how many years have elapsed from when a recovered bottle was manufactured, how many times it was reused, etc., so it is possible to accurately, easily, and efficiently separate reusable bottles from other bottles in a scientific manner and efficiently inspect for aging and other factors which cannot be determined from outside appearance. Further, it efficiently promotes reuse of returnable bottles and thereby lowers the costs relating to reuse and reduces energy and otherwise benefits the environment.

According to the method of managing reuse of a returnable bottle according to the aspect of the invention of claim 2, there is provided the aspect of the invention of claim 1 wherein the individual usage state data is data on the number of times of use and permission for continued reuse is judged by the data on the number of times of use of the bottle body indicating a predetermined number, so it is possible to accurately, easily, and efficiently separate bottles able to be reused from other bottles in a scientific manner.

According to the method of managing reuse of a returnable bottle according to the aspect of the invention of claim 3, there is provided the aspect of the invention of claim 1 wherein the product identification mark part is formed at the bottle body surface by laser engraving at the time of the hot end of the process for manufacturing the bottle body, so the product identification mark part of the bottle body surface becomes resistant to fine cracks etc.

According to the method of managing reuse of a returnable bottle according to the aspect of the invention of claim 4, there is provided the aspect of the invention of claim 1, wherein the product identification mark part is formed with a two-dimensional code, so it is possible to reduce the size of the product identification mark part of the bottle body surface and the aesthetic appearance is also excellent.

### BRIEF DESCRIPTION OF DRAWINGS

FIG. 1 is a front view of a bottle body in which a product identification mark part is formed and
FIG. 2 is a flow chart showing an outline of the present invention.

### DESCRIPTION OF PREFERRED EMBODIMENTS

Bottles are recycled by collecting the bottles from stores and local collection points, washing them at bottle dealers and bottle washing plants etc., refilling them at bottling plants, and shipping them out to stores in a continuously circulating system. In recent years, the entire process from washing to refilling has increasingly been handled all together by bottling plants (manufacturers). The management method of the present invention is a management method enabling easy separation of reusable bottles from other bottles in the processes from the washing process to the refilling process.

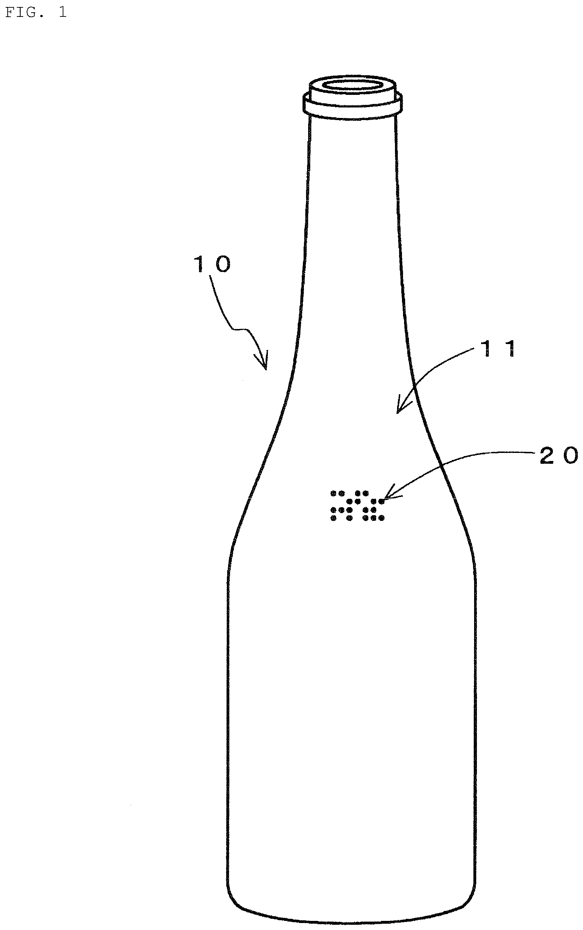

The method of managing reuse of a returnable bottle according to the present invention is a method of managing a returnable bottle which is collected after use, washed, then refilled for reuse. As shown in FIG. 1, the surface 11 of the bottle body 10 of a returnable bottle is formed with a product identification mark part 20. The individual mark part 20 should be formed at a position such as the shoulder which is resistant to scratching so as to prevent rubbing etc. from making identification difficult. This product identification mark part 20, as described in claim 3, is formed by laser engraving at the time of the hot end of the process for manufacturing the bottle body. Since this is done at the time of the hot end of the process, it is possible to protect the mark part from fine cracks and other trouble and the strength of the bottle body 10 is not damaged. Further, since the bottle body is high in temperature, formation by laser engraving is excellent in precision and thereby preferred.

Further, the product identification mark part 20 is formed at the bottle body engraved with a product identification code enabling identification of individual products. The product identification code may, for example, be one encoding the manufacturing date (year, month, day, hour, minute, and second) or manufacturing line etc. It is sufficient that it be data enabling identification of the individual bottle. Further, the product identification mark part, as described in claim 4, may be formed with a two-dimensional code. A two-dimensional code enables a greater amount of information to be encoded compared with a one-dimensional code (bar code), so the engraved area can be reduced in size and therefore the appearance of the bottle body can be kept from being harmed and the aesthetic appeal can be kept excellent.

The storage medium stores individual usage state data linked with the product identification data. Permission for continued reuse of the bottle body is judged based on the individual usage state data. The identification data assigned to the bottle body and usage state data are tied together. When reading the product identification mark part of the bottle body, the usage state data is called up to judge if the bottle can be reused so as to separate the bottle from others. Further, as described in claim 2, the individual usage state data is data on the number of times of use. Permission for continued reuse is judged by the data on the number of times of use indicating a predetermined number.

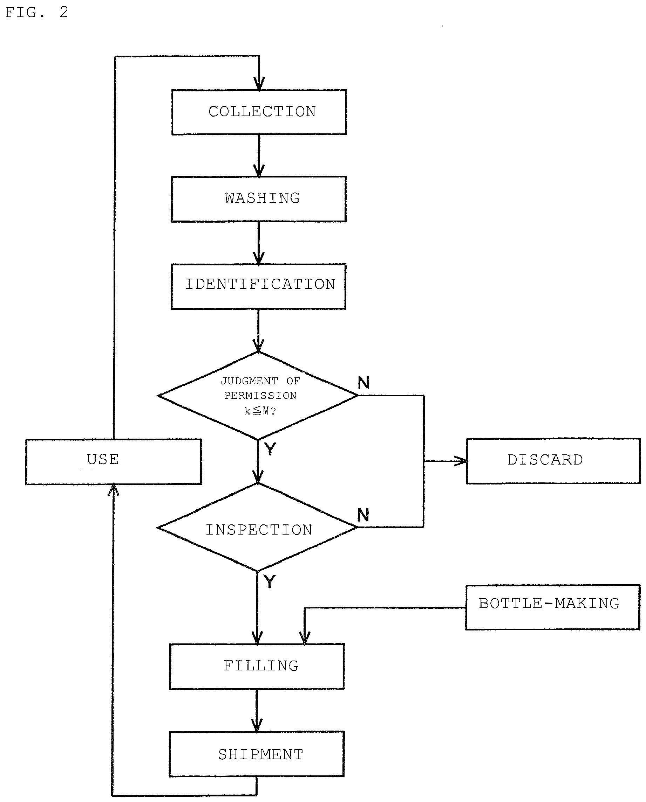

Next, the management method of the present invention will be explained in brief with reference to the flow chart of FIG. 2 and an example. First, a collected bottle is sent to a washing process where the bottle body is washed. Due to the washing, the product identification mark part becomes easier to recognize. Next, at the identification process, the product identification data of the product identification mark part of the bottle body is read. The reading can be performed by infrared rays, optical recognition, image recognition, or other known means.

When handling several types of bottle bodies at one time, the product identification data can be stored in the storage medium linked with shapes, colors, sizes, etc. so as to enable the bottles to be separated into different types without image recognition, weight measurement, or other complicated separation processes.

Further, the recognized product identification data is compared against product identification data in the storage medium to call up the individual usage state data of the bottle body. In the process for judgment of permission of continued use, if the data on the number of times of use (k) of the called up individual usage state data is a predetermined number (M) or less (k≤ M), the bottle is sent on to the next inspection process, while if the data is larger than the predetermined number (k>M), the bottle body is disposed of. In the inspection process, scratches and cracking of the bottle body etc. are also checked for. In the inspection process, visual inspection, image recognition, optical recognition, etc. is used to finally examine the bottle body for scratches, cracks, fractures, etc.

In the process for judgment of permission for continued use, permission for continued reuse of the bottle body is judged scientifically based on individual usage state data of the bottle body. A certain number of bottle bodies is discarded so as to reduce the number of bottle bodies processed in the final inspection process and thereby make the bottle recycling process more efficient and cut costs. Further, permission for reuse is judged by the number of times of use and other scientific data, so the standard for judging permission for reuse becomes clear and the quality becomes stable.

A bottle body judged able to be reused is filled in the filling process and then shipped out. The data of the number of times of use of the individual usage state data of a bottle body judged able to be reused in the final inspection process is stored at any timing from the inspection process to shipment by incrementing it by "+1". Due to this the data on the number of times of use of the reused then collected bottle body becomes "k+1" and the bottle is again managed and separated by the flow chart.

Incidentally, at this stage, individual usage state data other than the above data on the number of times of use, for example, the time, location, content, and other additional data relating to reuse can be written in and stored. These additional data may be efficiently and advantageously used for management of reuse of returnable bottles together with the data on the number of times of use or independently.

In this way, according to the method of managing reuse of a returnable bottle according to the present invention, by assigning each bottle body with product identification data and managing the same, it becomes possible to judge permission for reuse scientifically by a clear standard. It is possible to promote greater efficiency in the recycling process of bottle bodies, so the costs involved in reuse of bottles can be cut and reuse of bottles can be promoted, the energy accompanying manufacture can be saved, and generation of CO₂ and garbage can be suppressed. Further, it is possible to collect information on deterioration based on the elapsed time from manufacture of the bottle body and number of times of use in the stored usage state data, so further development and reuse of returnable bottles can be promoted and the environmental load can be reduced.

A novel method of managing reuse of a returnable bottle which individually manages returnable bottles so as to manage reuse linked with their individual states of use and thereby enable reusable bottles to be accurately, easily, and efficiently separated from other bottles in a scientific manner and enable efficient inspection of aging and other factors which cannot be determined from outside appearance, also, a method of managing reuse of a returnable bottle efficiently promoting reuse of returnable bottles and thereby lowering the costs relating to reuse and reducing energy and otherwise benefitting the environment, comprising, at the time of new production of a returnable bottle body, forming on a bottle body surface a product identification mark part engraved with an identification code as product identification data of the bottle body, reading the product identification mark part and writing and storing the product identification data of the bottle body in the storage medium linked with individual usage state data, and judging permission for continued reuse of the bottle body based on the individual usage state data stored in the storage medium.

## Claims

1. A method of managing reuse of a returnable bottle comprising,
at the time of new production of a returnable bottle body, forming on a bottle body surface a product identification mark part engraved with an identification code as product identification data of said bottle body,
reading said product identification mark part and writing and storing said product identification data of said bottle body in the storage medium linked with individual usage state data, and
managing permission for continued reuse of said bottle body based on said individual usage state data stored in said storage medium.

2. The method of managing reuse of a returnable bottle according to claim 1, wherein said individual usage state data is data on the number of times of use and the permission for continued reuse is managed by the data on the number of times of use of said bottle body indicating a predetermined number.

3. The method of managing reuse of a returnable bottle according to claim 1, wherein said product identification mark part is formed on the bottle body surface by laser engraving at the time of the hot end of the process for producing the bottle body.

4. The method of managing reuse of a returnable bottle according to claims 1, wherein said product identification mark part is formed with a two-dimensional code.
